Europäisches Patentamt

European Patent Office

Office européen des brevets

(11) Publication number: **0 126 795**
**B1**

## (12) EUROPEAN PATENT SPECIFICATION

(45) Date of publication of patent specification: **01.06.88**

(51) Int. Cl.⁴: **B 21 C 37/08**

(21) Application number: **83105334.3**

(22) Date of filing: **30.05.83**

(54) **Method for manufacturing welded pipes.**

| | |
|---|---|
| (43) Date of publication of application:<br>**05.12.84 Bulletin 84/49** | (73) Proprietor: **KAWASAKI JUKOGYO KABUSHIKI KAISHA**<br>**1-1 Higashikawasaki-cho 3-chome**<br>**Chuo-ku Kobe-shi Hyogo-ken (JP)** |
| (45) Publication of the grant of the patent:<br>**01.06.88 Bulletin 88/22** | (72) Inventor: **Matsui, Shigetomo**<br>**4-25, Higashiyama-Cho**<br>**Higashiosaka-shi Osaka-fu (JP)**<br>Inventor: **Hasegawa, Hisao**<br>**13-24, Nishiokamoto 2-Chome Higashinada-ku**<br>**Kobe-shi Hyogo-ken (JP)** |
| (84) Designated Contracting States:<br>**DE FR GB NL SE** | |
| (56) References cited:<br>**DE-A-3 220 029**<br>**GB-A-1 050 689**<br>**GB-A-1 067 836**<br>**US-A-2 666 831**<br>**US-A-2 673 274**<br>**US-A-3 127 674** | (74) Representative: **Klunker, Hans-Friedrich, Dr. et al**<br>**Patentanwälte Klunker . Schmitt-Nilson . Hirsch**<br>**Winzererstrasse 106**<br>**D-8000 München 40 (DE)** |

## Description

### Background of the invention

The present invention relates to a method according to the preamble of claim 1, as it is known from US—A—2 666 831.

The known method uses an inductor for producing the welding temperature, which extends transversely across the flat strip and along the longitudinal edges thereof including the welding location. The knowm method does not refer to the buckling or waving problem associated with the manufacture of thin-walled welded pipes.

The present invention relates, more particularly, to a method for preventing buckling or waving of edges of the strip in the manufacture of thin-walled welded tubular products.

Various types and kinds of pipes are used for various purposes. Among such pipes welded pipes are widely used because they can be fabricated in relatively simple manner at low cost.

In the production of a welded pipe, the strip which is wound in the form of a coil is unwound and fed through shaping rolls which gradually bring together the two longitudinal edges of the strip to bend the same into a tubular form circular in cross section, and finally the longitudinal edges of the strip are welded together. When the strip is being bent, the longitudinal edges of the strip are subjected to tensile stress in the longitudinal direction and plastically deformed. However, when the edges are abutted against each other, the strip except its edge portions are subjected to tensile stress while the edge portions are subjected to compressive stress due to the plastic strain at the edge portion during the bending process. As a result, during the welding process, the edges are subject to buckling or waving along the weld line. In the case of thick-walled pipes, such buckling or edge waving hardly occur, but in the case of thin-walled pipes, it frequently occurs. Therefore, it has been difficult to manufacture thin-walled welded pipes.

### Summary of the invention

The present invention seeks to overcome the above and other problems encountered in the manufacture of thin-walled welded pipes. An object of the invention is to provide a method for the manufacture of welded pipes in which the strip is heated in such a manner that during the bending process of the strip, tensile stress exerted on the edge portions thereof can be reduced to a minimum, and after the edges have been abutted against each other, the compressive stress exerted on the edge portions can be also reduced to a minimum, whereby the thin-walled welded pipes which have hitherto been difficult to manufacture can be manufactured without difficulty.

The method according to the invention is characterized by the features of the characterizing clause of claim 1.

According to the present invention, during the process for bending the strip into a tubular form, only the longitudinal edge portions of the strip are heated so that tensile stresses exerted thereto will be reduced to a minimum, and after the edges have been abutted against each other, that is, after the strip has been bent into a tubular form substantially circular in cross section, substantially the whole strip is also heated so that the tensile stress exerted on the portion of the strip except its edge portions will be reduced to a minimum while the compressive stress exerted on the edges will be also reduced to a minimum, whereby the buckling of the edges is prevented. Therefore, thin-walled welded pipes which have hitherto been difficult to produce can be fabricated without difficulty.

Thus, various kinds and types of welded pipes can be fabricated without difficulty.

The above and other objects, effects and features of the present invention will become more apparent from the following description of preferred embodiments thereof taken in conjunction with the accompanying drawings.

### Brief description of the drawings

FIGS. 1 and 2 are views explanatory of the basic principle of the method for the manufacture of tubular products;

FIG. 3 is a view, in side elevation, showing how tensile stress is exerted on the edge portions of the strip, resulting in edge buckling or waving thereof;

FIG. 4 is a schematic perspective view showing a first form of the present invention;

FIG. 5 is a view, in side elevation, showing primarily temperature distributions in the skelp when heated by heating devices.

### Detailed description of the invention

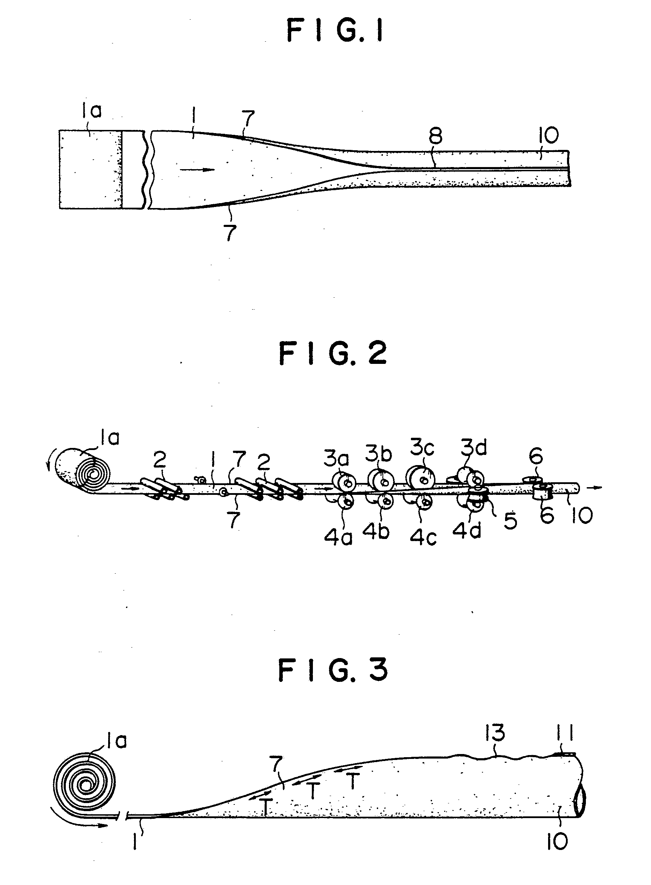

Referring first to FIGS. 1 and 2, a strip of steel 1 is previously wound in the form of a coil 1a. The strip 1 is unwound from the coil 1a through a plurality of rollers 2 and then fed through conventional shaping rolls 3a, 4a, 3b, 4b, 3c, 4c, 3d, 4d and 5 which gradually bed the strip 1 into a tubular shape, its longitudinal or side edges 7 being gradually bent toward, and finally abutted against, each other by a pair of shaping rollers or pressure rollers 6 as indicated by 8 in FIG. 1. Thus, the strip 1 is formed into a tubular section 10 circular in cross section. Thereafter, the abutting edges 8 are welded in the longitudinal direction as will be described hereinafter.

During the process in which the strip 1 is bent into the form of the tubular section 10; that is, during the process in which the side edges 7 are bent or drawn toward each other, a longitudinal tensile stress T in excess of the elastic limit of the strip 1 is exerted on the side edges 7 as shown in FIG. 3 so that the edges 7 are subjected to pastic deformation. At the end of the bending process when the edges 7 are abutted against each other as shown at 8, tensile stress is exerted on the tubular section 10. However, the edges 7 which have been subjected to the plastics deformation are subjected to compressive stress because even after the edges 7 have been abutted against each other to settle in a state parallel with the axis of the tubular section 10, they cannot return fully to the condition prior to being subjected to the tensile plastic deformation.

As a result, as shown in FIG. 3, before the abutted edges 8 are welded together, the edges 7 buckle mainly in the region between the shaping roll 3d and the welding position so that edge waving 13 occurs. In the case of pipes with relatively thick wall, almost no edge waving 13 occurs, but in the case of pipes with relatively thin wall, edge waving 13 frequently occurs so that the welding of the abutted edges 8 becomes very difficult. For instance, when the ratio $t/D$, where $t$ is the thickness of the strip and D is the diameter of the pipe, is less than 0.02, it becomes impossible to manufacture tubular products.

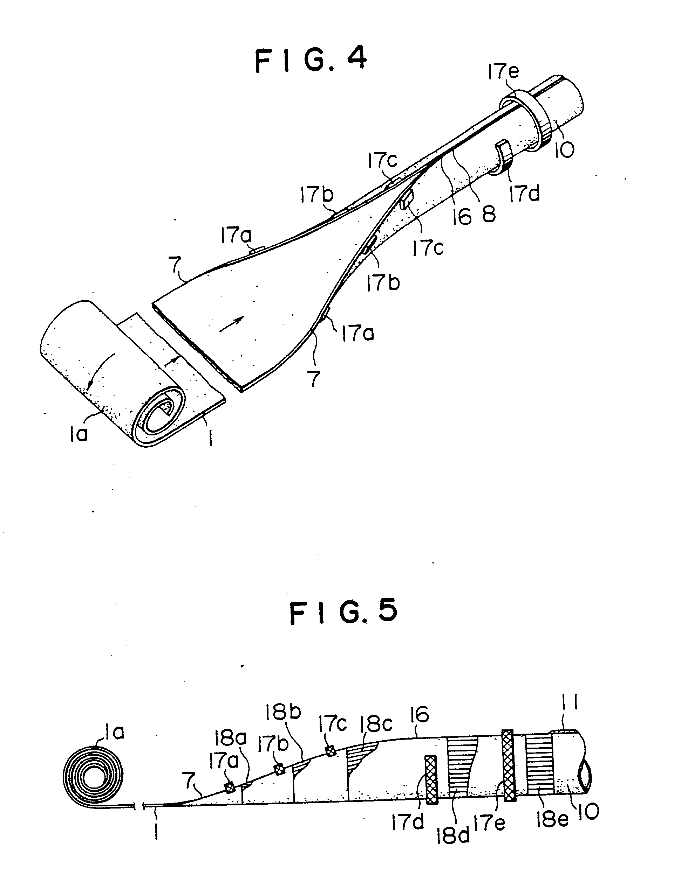

Referring next to FIGS. 4 and 5, according to the present invention, a suitable number of heating devices 17a, 17b and 17c, such as high-frequency induction heaters, are disposed between the shaping rolls in opposed relationship with the edges 7 of the strip 1 in the region where tensile stress is exerted on the edges. Therefore, the edges 7 are heated as the strip is being advanced while being bent, and temperature distributions as indicated by 18a, 18b and 18c are established adjacent to the edges 7. As a result, the tensile stress exerted on the edges 7 is reduced, whereby the edges 7 become free from plastic deformation. In FIG. 5, the horizontal extents of the areas 18a, 18b and 18c indicating the temperature distributions represent the values of temperature. It is seen that the heated areas are gradually expanded from the edges 7 as the edges 7 pass through the heating devices 17a, 17b and 17c and the temperature of the edges 7 gradually increases. Adjacent to the edge abutting point 16 where the edges 7 start to abut against each other, there is disposed a heating device 17d, such as a high-frequency induction heater, which surrounds from below the tubular section 10 about two thirds of its circumference so that a heated area 18d having the temperature distribution as shown is produced, and consequently the tensile stress exerted on the cylindrical portion between the edges 7 are reduced. As a consequence, the compressive stress exerted on the edges 7 can be further reduced.

A ring-shaped heating device 17e, such as a high-frequency induction heater, which encircles the tubular section 10 is disposed immediately before the position 11 where the welding of the opposed edges 8 is started whereby the tubular section 10 is uniformly heated as indicated by 18e. As a result, buckling of the edges 7 can be prevented.

When the welded tubular section 10 is cooled to room temperature, the welded seam is smooth. That is, even in the case of thin-walled pipes, no edge waving will occur.

It is to be understood that the present invention is not limited to the specific example described above. For instance, instead of the high-frequency heat induction devices, any other suitable heating means such electric strip heaters may be used. Furthermore the present invention may be applied equally to the manufacture of thick-walled tubular products.

As described above the side edges of the strip are heated when they are subjected to tensile stresses during the process of bending the skelp into a tubular form. As as result, the plastic deformation of the edges can be reduced to a minimum.

Furthermore, the entire strip is heated during the process stae in which the edges start to abut against each other and in which the tensile stress is exerted on the portions other than the edge portions while the edge portions are subjected to compressive stress, so that the tubular section are uniformly heated. As a consequence, not only the tensile stress but also the compressive stress can be reduced so that no edge waving occurs along the side edges.

**Claims**

1. A method for the manufacture of welded pipes in which a strip (1) is fed through shaping rolls (3a, 4a, 3b, 4b, 3c, 4c, 3d, 4d, 5) which gradually bend the strip (1) into a tubular form and bring together the longitudinal edges (7) of the strip (1) in opposed abutting relation, and then the thus opposed edges (8) of the bent tubular section (10) are welded together, the edge regions of the strip (1) being heated before the opposed edges (8) are welded together, characterized in that, for preventing buckling or waving of the longitudinal edges (7), heating of solely the edge regions is effected in a first part of the strip movement between the beginning of bending the strip (1) and abutment of the longitudinal edges (7), thereby reducing tensile stress exerted on the edge regions, and additionally in a second part of the strip movement between the abutment of the longitudinal edges (7) and immediately before the welding, the strip (1) bent into tubular form is heated around substantially the entire circumference thereof thereby reducing compressive stress exerted on the edge regions, and that the welding is initiated after the second part of the strip movement.

2. The method according to claim 1, wherein the edge regions are heated by means of a plurality of heating means (17a, 17b, 17c) disposed successively along the paths of the longitudinal edges.

3. The method according to claim 1 or 2, wherein the strip (1) is heated around substantially the entire circumference thereof by successive heating means (17d, 17e) disposed at least partly around the tubular section (10).

**Patentansprüche**

1. Verfahren zur Herstellung von geschweißten Rohren, bei dem ein Band (1) durch Formgebungswalzen (3a, 4a, 3b, 4b, 3c, 4c, 3d, 4d,

5            **0 126 795**            6

5) geführt wird, die das Band (1) allmählich in Rohrform biegen und die Längskanten (7) des Bandes (1) in zugewandt aneinanderstoßende Lage zusammenbringen, und bei dem die so zugewandten Kanten (8) des gebogenen, rohrförmigen Abschnitts (10) zusammengeschweißt werden, wobei die Kantenbereiche des Bandes (1) erhitzt werden, ehe die zugewandten Katen (8) zusammengeschweißt werden, dadurch gekennzeichnet, daß zur Verhinderung von Wölbungsbildung oder Wellenbildung an den Längskanten (7) in einem ersten Teil der Bandbewegung zwischen dem Beginn des Biegens des Bandes (1) und der Anlage der Längskanten (7) lediglich die Kantenbereiche erhitzt werden, wodurch auf die Kantenbereiche ausgeübte Zugspannung vermindert wird, und zusätzlich in einem zweiten Teil der Bandbewegung zwischen der Anlage der Längskanten (7) und dicht vor dem Schweißen das in Rohrform gebogene Band (1) im wesentlichen um seinen gesamten Umfang erhitzt wird, wodurch auf die Kantenbereiche ausgeübte Druckspannung vermindert wird, und daß das Schweißen nach dem zweiten Teil der Bandbewegung begonnen wird.

2. Verfahren nach Anspruch 1, bei dem die Kantenbereiche durch eine Mehrzahl von Heizeinrichtungen (17a, 17b, 17c) erhitzt werden, die eine nach der anderen längs der Bewegungsbahn der Längskanten angeordnet sind.

3. Verfahren nach Anspruch 1 oder 2, bei dem das Band (1) im wesentlichen um seinen gesamten Umfang durch aufeinander folgende, mindestens teilweise um den rohrförmigen Abschnitt (10) angeordnete Heizeinrichtungen (17d, 17e) erhitzt wird.

**Revendications**

1. Procédé de fabrication de tubes soudés dans lequel une bande (1) est amenée de manière à passer dans des rouleaux de formage (3a, 4a, 3b, 4b, 3c, 4c, 3d, 4d, 5) qui courbent progressivement la bande (1) pour lui donner une forme tubulaire et rapprochent les bords longitudinaux (7) de la bande (1) de manière à les amener en butée et dans lequel les bords opposés (8) de la section tubulaire (10) résultant du pliage de la bande sont soudés ensemble, les zones marginales de la bande (1) étant chauffées avant que les bords opposés (8) soient soudés ensemble, caractérisé en ce que, pour éviter toute déformation ou ondulation des bords longitudinaux (7), un chauffage limité aux zones des bords est effectué pendant la première partie du déplacement de la bande entre le début du pliage de la bande (1) et la mise en butée des bords longitudinaux (7), ce qui a pour effet de réduire la contrainte de tension exercée sur les zones marginales, en ce qu'ensuite pendant une deuxième partie du déplacement de la bande entre la mise en butée des bords longitudinaux (7) et juste avant la soudage, la bande (1) pliée en forme de section circulaire est chauffée pratiquement sur toute sa circonférence, ce qui a pour effet de réduire la contrainte de compression exercée sur les zones marginales et en ce que le soudage ne commence qu'après la deuxième partie du déplacement de la bande.

2. Procédé selon la revendication 1, caractérisé en ce que les régions marginales sont chauffées au moyen de plusieurs dispositifs de chauffage (17a, 17b, 17c) placés les uns à la suite des autres le long des trajets des bords longitudinaux.

3. Procédé selon l'une des revendications 1 ou 2, caractérisé en ce que la bande (1) est chaufée pratiquement sur toute sa circonférence par des dispositifs de chauffage (17d, 17e) entourant au moins en partie la section tubulaire (10).

4

# F I G. I

# F I G. 2

# F I G. 3

# F I G. 4

# F I G. 5